Europäisches Patentamt

(19) European Patent Office

Office européen des brevets

(11) Publication number: **0 100 629**
**B1**

(12) **EUROPEAN PATENT SPECIFICATION**

(45) Date of publication of patent specification: **21.01.87**

(21) Application number: **83304241.9**

(22) Date of filing: **21.07.83**

(51) Int. Cl.⁴: **F 16 K 5/02**

(54) **Plug valve.**

(30) Priority: **29.07.82 GB 8221874**

(43) Date of publication of application:
**15.02.84 Bulletin 84/07**

(45) Publication of the grant of the patent:
**21.01.87 Bulletin 87/04**

(84) Designated Contracting States:
**AT BE CH DE FR IT LI LU NL SE**

(56) References cited:
**EP-A-0 032 037**
**EP-A-0 032 038**
**DE-C- 21 905**
**FR-A-1 384 864**
**FR-A-1 427 918**
**US-A-1 734 074**
**US-A-3 330 296**
**US-A-3 981 482**

(73) Proprietor: **XOMOX CORPORATION**
**4444 Cooper Road**
**Cincinnati Ohio 45242 (US)**

(72) Inventor: **Sandling, Michael John**
**Beggars Roost**
**Prixford near Barnstaple Devon (GB)**

(74) Representative: **Williams, Trevor John et al**
**J.A. KEMP & CO. 14 South Square Gray's Inn**
**London WC1R 5EU (GB)**

Courier Press, Leamington Spa, England.

## Description

This invention relates to a rotary plug valve and more especially to a plug valve having a plug rotatable within a chamber in the valve housing, a liner comprising resilient plastics material being provided between the plug and the internal wall of the chamber for sealing purposes.

In such valves the plastics material acts as a sleeve to provide a seal between the metal body of the valve and the metal plug which operates the opening and closing function. In the Applicants earlier European patent application EP—A—0032038, there is disclosed a rotary plug valve in which a valve plug is rotatable within a valve liner which itself is received with a frusto-conical chamber in the valve so that for replacement purposes the plug and liner can be removed as a unit from the frusto-conical valve chamber. While generally these valve constructions are proving very successful we have now found that for some purposes, particularly for smaller size valves, it is advantageous for the valve plug to have a conicity in the opposite sense to the valve chamber with the valve liner consequently increasing in thickness from one end of the chamber to the other. With this construction the sealing action of the valve can be accurately controlled simply by drawing the valve plug towards the wider ends of the frusto-conical chamber to compress the liner. When it is desired to change the valve plug and liner, tight binding of the liner on the wall of the chamber can readily be released simply by moving the valve plug axially to a small extent before drawing the valve plug and liner as a unit from the chamber.

In US—A—1734074 there is disclosed a rotary plug valve comprising a housing having a body with inlet and outlet ports for the inlet and outlet of fluid, a frusto-conical chamber into which the ports open, a liner of compressible material within the chamber having apertures therethrough aligned with the ports and a frusto-conical plug having a flow passage therethrough received within the liner, said plug being sealed by the liner and having an extension portion adapted for rotation from exteriorly of the housing between valve-open and valve-closed positions, said plug having a taper in the direction opposite to the taper of the chamber. This prior construction whilst providing a reverse taper to the plug and chamber makes no use of this feature in that the plug itself is not movable relative to the chamber and neither is the plug and liner conveniently removable as a unit from the chamber for refurbishment purposes.

The present invention is characterised in that the housing includes a removable cover portion having an aperture therethrough in which is received the extension portion of the plug, in that the direction of the taper of the plug is such that the plug widens away from said extension portion, and in that means are provided operative on said extension portion for moving the plug axially relative to the body in order to control the degree of compression of the liner between the oppositely tapered side walls of the plug and the chamber.

Preferably the cover portion has the liner secured thereto. Preferably the cover portion has the liner comprised of resiliently compressible material moulded thereto and the cover portion may itself be formed as the cage to which the compressible material is moulded as disclosed in the specification of our above mentioned European patent application.

Preferably the means moving the plug axially comprises a nut fitted to one of the plug and the housing and again supported directly or indirectly with a shoulder on the other of the plug and the housing.

In the particularly preferred construction as later illustrated the means for moving the plug axially comprises a nut threaded to the plug and engageable via a thrust ring received in an annular space between the plug extension portion and the cover portion with an abutment on the housing cover portion. A spacer ring may be provided in the annular space to have a shoulder engaging said abutment, said thrust ring being received between one end of said nut and one end of said spacer ring. The other end of the spacer ring may serve as an abutment for compression of a gland ring received in an area of spaced defined by the liner, the extension portion of the plug and the other end of the spacer ring.

It will be appreciated that while the valve would normally be constructed with the inlet and outlet apertures aligned with the passage in the valve open position, the passage thus providing a straight path for the flow of fluid through the valve where open, in an alternative construction there may only be one aperture through a frusto-conical wall of the chamber with the other aperture being provided through a bottom wall of the chamber, the passage in the plug being bent through 90° to provide the necessary connections.

The invention will now be further described, by way of example, with reference to the accompanying drawings, in which:

Figure 1 is a longitudinal sectional view of a fluid flow control valve embodying the present invention, the valve being shown in its open position with the section being taken along the line I—I of Figure 2;

Figure 2 is a cross sectional view taken along the line II—II of Figure 1;

Figure 3 is a top plan view to a reduced scale of the valve of Figure 1;

Figure 4 shows a detail of the seal indicated by circle-IV of Figure 1;

Figure 5 is an illustration similar to Figure 1 but showing an alternative, modified, construction; and

Figure 6 is a horizontal sectional view of a preferred construction of a valve cover portion formed integrally with a liner supporting cage.

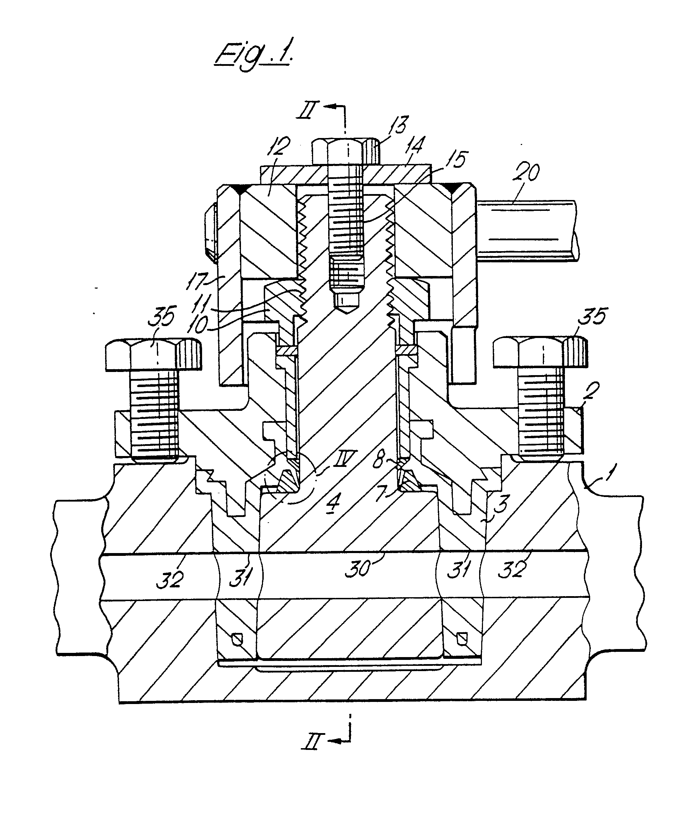

Illustrated in the drawings is a fluid flow control valve comprising a valve housing having a body portion 1 and a cover portion 2. Defined within the valve housing is a frusto-conical chamber which has its wider open end closed by the cover portion 2. Within the chamber is located a valve liner 3 made of resilient plastics material and received within the liner 3 is a valve plug 4. The valve plug 4 is rotatable between a closed position and an open position shown in Figure 1, where a through passageway 30 in the valve plug is lined with inlet and outlet apertures 31 in the valve linear and inlet and outlet ports 32 in the valve body. The main portion of the valve plug 4 received within the liner 31 has a frusto-conical shape with the direction of taper being opposite to that of the frusto-conical chamber in the valve body so that the liner 3 increases in thickness from the closed end of the chamber to the open end closed by the cover 2.

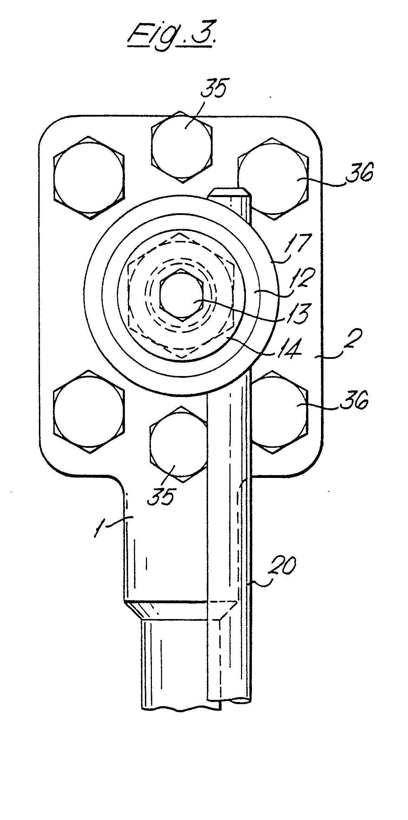

The cover portion 2 is secured to the main portion of the valve body by bolts 36 (Figure 3). Keyed to an upper extension portion of the valve plug 4 is an actuating member 12 secured in position on the extension portion of the valve plug by means of a washer 14 and a bolt 13 screw-threadedly received in a bore in the top of the extension portion. A header ring 17 is secured about the actuating member 12 to provide a skirt, part of which is cut out at 22 so as to receive a stop 23 secured to the housing cover portion, the ends of the cutout 22 acting as stops to limit rotation of the ring 17, and thus of the actuating member 12, to 90° of rotation between its valve open and valve closed positions. A handle 20 is received within a bore in the actuating member 12 and secured therein by a socket-headed grub screw 21. A seal control nut 10 is threaded at 11 to the extension portion of the plug 4 and has a skirt projecting into an annular space between the extension portion of the plug and the cover portion 2 to engage a thrust ring 9 which itself engages the top of a spacer ring 6, the spacer ring 6 being provided with a shoulder engaging a shoulder 16 on the cover portion 2 and its lower end engaging a gland seal ring 8. A delta seal ring 7 is provided in a recess in the liner 3 to engage the top of the main frusto-conical portion of the valve plug 4 as will be described later in greater detail in connection with Figure 4.

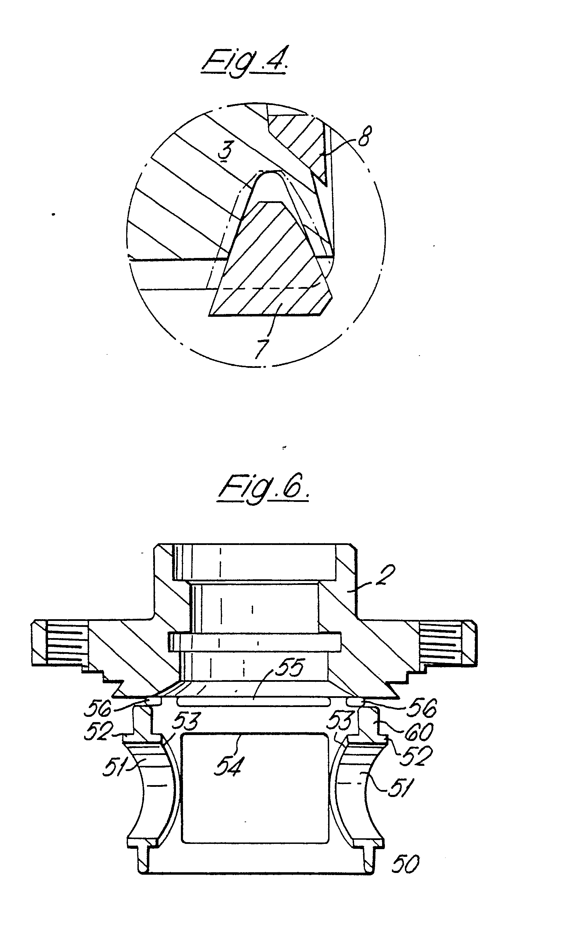

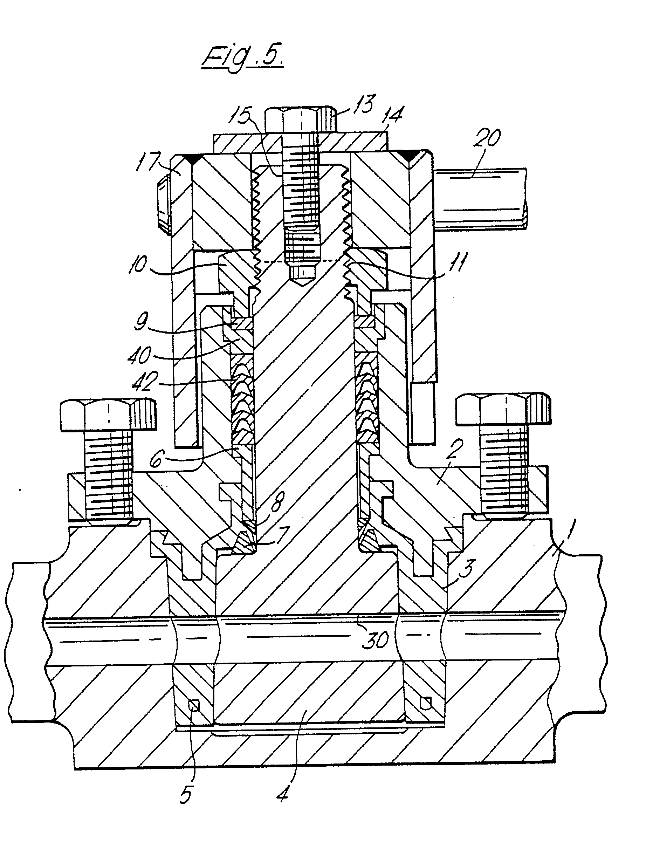

Preferably the housing cover 2 has the plastics material of the liner 3 moulded directly thereto so as to be securely fastened thereto as illustrated in the drawings. The cover portion 2 is provided with a cage having a lower annular portion 5 connected by spaced vertical portions, not shown, with the upper part of the cover portion in order that the liner may function with the plastics material being moulded to the cover portion as described in our above-mentioned European patent application. However in some cases where the sealing requirements of the valve are not too stringent it may simply be necessary to have a single ring 5 at the bottom of the liner without this ring being connected to the main upper part of the cover portion of the housing or, indeed, in some circumstances it may be possible to dispense with the ring 5 in its entirety. In these latter two cases instead of the plastics material being moulded directly to the cover housing it may be so formed as simply to be resiliently retained by being sprung into recesses in the cover portion. However the preferred construction is as shown in Figure 6 as will be explained later.

During assembly of the valve the valve plug 4, together with the sealing and spacing rings, is assembled as a unit with the cover portion 2 by the nut 10 being loosely screwed to the end of the extension portion of the valve plug. The valve plug and liner are than inserted as a unit into the frusto-conical chamber within the valve body 1 and the cover 2 is securely bolted into position by means of bolts 36. Jacking bolts 35 are threaded in bores through a flange around the cover portion 2 for a purpose to be disclosed later, at this time these bolts being left sufficiently loose to permit proper tightening down of the cover portion 2 by means of the bolts 36.

Once the cover portion 2 has been secured in position the nut 10 is tightened down to engage the thrust ring 9 so as to abut, *via* the thrust ring 9 and the shoulder on the spacer ring 6, with the abutment shoulder 16 on the cover portion 2. This causes the valve plug 4 to be drawn upwardly away from the closed end of the valve chamber and, because of the reverse taper, to compress the valve liner between itself and the frusto-conical inner surface of the valve chamber so as to provide a seal around the ports 32 and aperture 31. Simultaneously with compression of the valve lining the delta sealing ring 7 is compressed between the liner and the top of the frusto-conical portion of the valve plug to seal at that location with the gland 8 being compressed also between the thus deformed liner and the bottom end of the spacer ring 8 to provide a gland sealing action around the extension portion of the valve plug 4. Also the thrust ring 9 is clamped by the abutment thereagainst of the lower end of the skirt nut 10 to cause an additional sealing action, the gland acting directly between the housing cover portion 2 and the extension portion of the valve plug 4.

The action of the delta ring 7 and gland seal 8 can be appreciated from the showing of Figure 4 where the seals and the liner are shown in their relaxed condition by solid lines. Upon drawing up of the valve plug the delta sealing ring 7 is forced upwardly to adopt the position shown by the broken lines with consequent deformation of the valve liner 3 which then is cammed into tight engagement with the peripheral surface of the section portion of the valve plug with sealing ring 8 acting downwardly to ensure radial movement of valve liner 3.

Once the nut 10 has been tightened to the required degree the actuating member 12 is placed in position and tightened down by the action of the screw 13. A recess at the lower end of the actuating member 12 is shaped to receive the nut 10 so that the nut 10 is held against rotation by the fact that the actuating member 12 itself is so keyed to the valve plug as to be non-rotatable relatively thereto.

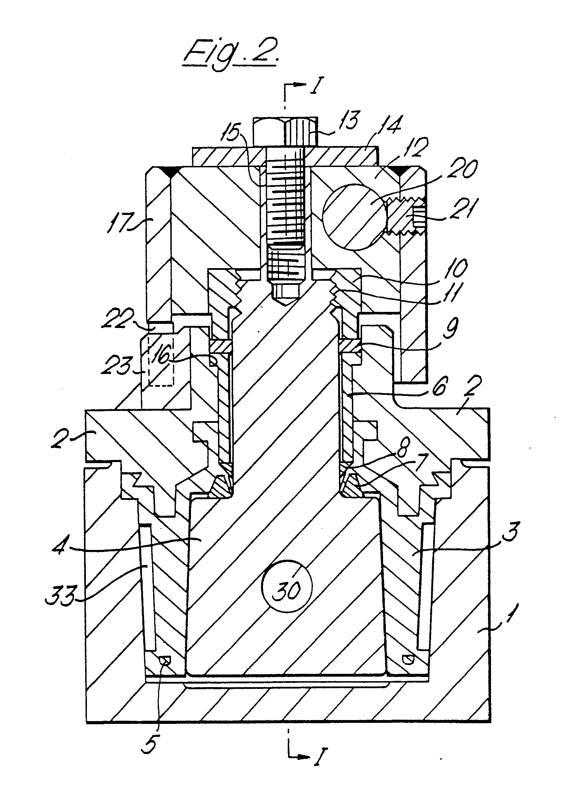

The general operation of the valve liner 3 with the supporting cage structure downwardly projecting from the housing cover portion 2 can be appreciated from the disclosure of our above-mentioned copending European patent application. It may be noted from Figure 2 that the outer periphery of the valve liner has spaces 33 at which it is relieved so that the basic sealing action only takes place when the liner is directly supported by internal metal cage structure with forces between the valve plug and the liner being reduced opposite the relief portion 33 so as to reduce frictional resistance to rotation of the valve plug 4.

During use of the valve should leakage start occurring then it is a straightforward matter simply to remove the actuating member 12 and to tighten down the nut 10 to increase the sealing forces.

Should it be desired to repair the valve, for example by replacing the liner and valve plug, then all that is required is simply to unscrew the nut 10 slightly to relieve the wedging forces biasing the valve liner against the frusto-conical side wall of the valve chamber and then, after release of the screws 36, to screw down the jacking screw 35 to force the valve cover 2 downwardly away from the valve body 1 and thus to draw the complete unit of valve liner and valve plug out from the tapered valve chamber.

Figure 5 shows a construction generally similar to that of Figure 1 with the exception that instead of the thrust ring 9 being sandwiched directly between the nut 10 and the spacer ring 6 it is sandwiched between the nut 10 and a pressure set ring 40 with a series of seal rings 42 being provided between the pressure set ring 40 and the top of the spacer ring 6. This constructions works generally as before with the exception that the spacer ring 6 can float upwardly slightly to cause the cup seal rings 42 to be forced into tight sealing engagement with the peripheral surfaces defining the annular space in which they are received.

As previously mentioned the particular valve constructions as disclosed are intended for use with smaller sized valves, for example with passage diameters of about 2 cms.

Figure 6 shows a preferred construction of the cover portion 2 formed integrally with a cage about which the liner will be moulded prior to insertion in the valve housing. As shown the top portion 2 has on its lower side a cage which comprises a bottom ring portion 50 and an upper ring portion 60. Aligned circular apertures 51 are provided through opposite sides of the peripheral wall of the cage and are surrounded by outer and inner flanges 52 and 53 respectively. The peripheral wall of the cage is also provided with a pair of opposite cut-out portions 54 and additional cut-out apertures 55 and 56 are provided between the upper ring portion 60 and the main body of the lid portion 2. The liner, when it is moulded to the lid portion 2, has apertures therethrough centrally of the apertures 51 for the passage of fluid and the valve in its open position with the passage through the valve plug aligned with the passages 51. Moulded liner material penetrates the apertures 54, 55 and 56 in order that the liner may be securely fixed to the cage. The flange portions 52 and 53 ensure that the liner is well supported for a good sealing action between the plug and the valve housing around the fluid inlet and outlet ports. The cut-out portions 54 facilitate the provision of the space 33, shown in Figure 2, whereby the force between the rotary plug and the liner is relieved at these portions to facilitate rotation of the valve plug.

**Claims**

1. A rotary plug valve comprising a housing having a body (1) with inlet and outlet ports (32) for the inlet and outlet of fluid, a frusto-conical chamber into which the ports open, a liner (3) of compressible material within the chamber having apertures (31) therethrough aligned with the ports (32) and a frusto-conical plug (4) having a flow passage (30) therethrough received within the liner, said plug (4) being sealed by the liner and having an extension portion adapted for rotation from exteriorly of the housing between valve-open and valve-closed positions, said plug (4) having a taper in the direction opposite to the taper of the chamber, characterised in that the housing includes a removable cover portion (2) having an aperture therethrough in which is received the extension portion of the plug (4), in that the direction of the taper of the plug (4) is such that the plug widens away from said extension portion, and in that means (10, 16) are provided operative on said extension portion for moving the plug (4) axially relative to the body in order to control the degree of compression of the liner (3) between the oppositely tapered side walls of the plug and of the chamber.

2. A rotary plug valve according to claim 1, characterised in that the cover portion (2) has the liner (3) secured thereto.

3. A rotary plug valve according to claim 2, characterised in that the cover portion has the liner (3) comprised of resiliently compressible plastics material moulded thereto.

4. A rotary plug valve according to claim 3, characterised in that the cover portion (22) comprises a cage (50, 51, 60) to which the compressible plastics material is moulded.

5. A rotary plug valve according to any one of claims 1 to 4, characterised in that the means for moving the plug (4) axially comprises a nut (10) threaded to one of the plug (4) and housing and engageable directly or indirectly with a shoulder (16) on the other of the plug (4) and the housing.

6. A rotary plug valve according to claim 5, characterised in that the nut (10) is threaded to the plug and is engageable *via* a thrust ring (9) received within an annular space between the plug extension portion and the cover portion (2) with an abutment (16) on the housing cover portion.

7. A rotary plug valve according to claim 6, characterised in that a spacer ring (6) is provided in the annular space and has a shoulder engaging said abutment (16), said thrust ring (9) being received between one end of said nut (10) and one end of said spacer ring (6).

8. A rotary plug valve according to claim 7, characterised in that the other end of the spacer ring (6) serves as an abutment for compression of a gland ring (8) received in an annular space defined by the liner (3), the extension portion of the plug (4) and the other end of the spacer ring (6).

9. A rotary plug valve according to claim 6, characterised in that a pressure control ring (40) is provided in the annular space and has a shoulder engaging said abutment, said thrust ring (9) being received between one end of said nut (10) and said pressure control ring (40), further compressible seal means (42) being provided between the pressure control ring and the one end of a spacer ring (6) the other end of which serves as an abutment for compression of a gland seal received in an annular space defined by the liner (3), the extension portion of the plug (4) and the said other end of the spacer ring (6).

10. A rotary plug valve according to any one of claims 6 to 9, characterised in that the plug (4) is rotatable by means (20) operable to rotate the extension portion thereof without causing relative movement of the said nut (10) and plug (4).

11. A rotary plug valve according to any preceding claim, characterised in that a delta section seal ring (7) is provided between a shoulder on the plug and the liner (3).

12. A rotary plug valve according to any preceding claim, characterised in that the housing cover portion (2) is secured to the body (1) by bolts and jacking bolts (35) are provided for forcing the cover portion (2) away from said body (1).

**Patentansprüche**

1. Drehendes Hahnventil mit einem Gehäuse, das einen Körper (1) mit Ein- sowie Auslaßöffnungen (32) für den Zulauf sowie Ablauf eines Fluids, eine kegelstumpfförmige Kammer, in die die Öffnungen münden, eine Ventilbuchse (3) aus kompressiblem Material innerhalb der Kammer mit zu den Öffnungen (32) fluchtenden Durchgangsöffnungen (31) und einen innerhalb der Ventilbuchse aufgenommenen, einen Durchgangskanal (30) aufweisenden kegelstumpfförmigen Ventilkegel (4) umfaßt, wobei der Ventilkegel (4) durch die Ventilbuchse abgedichtet ist sowie ein für eine Drehung von außerhalb des Gehäuses zwischen einer Ventiloffen- sowie Ventilschließstellung ausgebildetes Verlängerungsstück hat und der Ventilkegel (4) mit einer entgegengesetzt zur Verjüngung der Kammer gerichteten Verjüngung versehen ist, dadurch gekennzeichnet, daß das Gehäuse mit einem einen Durchgang, in dem das Verlängerungsstück des Ventilkegels (4) aufgenommen ist, aufweisenden Deckelteil (2) versehen ist, daß die Verjüngung des Ventilkegels (4) in einer Richtung, in der sich der Ventilkegel von seinem Verlängerungsstück hinweg erweitert, verläuft und daß an dem Verlängerungsstück wirksame Einrichtungen (10, 16) vorgesehen sind, die den Ventilkegel (4) axial mit Bezug zum Körper bewegen, um das Ausmaß der Kompression der Ventilbuchse (3) zwischen den zueinander entgegengesetzt verjüngten Seitenwänden des Ventilkegels und der Kammer zu regulieren.

2. Drehendes Hahnventil nach Anspruch 1, dadurch gekennzeichnet, daß die Ventilbuchse (3) am Deckelteil (2) befestigt ist.

3. Drehendes Hahnventil nach Anspruch 2, dadurch gekennzeichnet, daß die aus nachgiebig kompressiblem Kunststoffmaterial gebildete Ventilbuchse (3) am Deckelteil (2) angeformt ist.

4. Drehendes Hahnventil nach Anspruch 3, dadurch gekennzeichnet, daß das Deckelteil (2) einen Käfig (50, 51, 60) umfaßt, an den das kompressible Kunststoffmaterial angeformt ist.

5. Drehendes Hahnventil nach einem der Ansprüche 1 bis 4, dadurch gekennzeichnet, daß die Einrichtung zur axialen Bewegung des Ventilkegels (4) eine entweder mit dem Ventilkegel (4) oder dem Gehäuse verschraubte Mutter (10) umfaßt, die unmittelbar oder mittelbar mit einer Schulter (16) am anderen, durch das Gehäuse oder den Ventilkegel (4) gebildeten Bauteil zur Anlage zu bringen ist.

6. Drehendes Hahnventil nach Anspruch 5, dadurch gekennzeichnet, daß die Mutter (10) auf den Ventilkegel geschraubt und über einen innerhalb eines Ringraumes zwischen dem Ventilkegel-Verlängerungsstück und dem Deckelteil (2) aufgenommenen Druckring (9) mit einem Widerlager (16) am Deckelteil des Gehäuses zur Anlage kommt.

7. Drehendes Hahnventil nach Anspruch 6, dadurch gekennzeichnet, daß in dem Ringraum eine Abstandshülse (6) mit einer am Widerlager (16) zur Anlage kommenden Schulter angeordnet ist, wobei der Druckring (9) zwischen einer Stirnfläche der Mutter (10) und einer Stirnfläche der Abstandshülse (6) aufgenommen ist.

8. Drehendes Hahnventil nach Anspruch 7, dadurch gekennzeichnet, daß die andere Stirnfläche der Abstandshülse (6) als eine Druckfläche für eine Kompression eines in einem von der Ventilbuchse (3), dem Verlängerungsstück des Ventilkegels (4) und der anderen Stirnfläche der Abstandshülse (6) bestimmten Ringraum aufgenommenen Stopfbuchsringes (8) dient.

9. Drehendes Hahnventil nach Anspruch 6, dadurch gekennzeichnet, daß in dem Ringraum ein mit einer am Widerlager anliegenden Schulter versehener Druckeinstellring (40) angeordnet ist, daß der Druckring (9) zwischen der einen Stirnfläche der Mutter (10) sowie dem Druckeinstellring (40) aufgenommen ist und daß zwischen dem Druckeinstellring und der einen Stirnfläche der Abstandshülse (6), deren andere Stirnfläche als eine Druckfläche für eine Kompression einer in einem von der Ventilbuchse (3), dem Verlängerungsstück des Ventilkegels (4) und der anderen Stirnfläche der Abstandshülse (6) bestimmten Ringraum aufgenommenen Stopfbuchse dient, weitere kompressible Dichtungseinrichtungen (42) vorgesehen sind.

10. Drehendes Hahnventil nach einem der Ansprüche 6 bis 9, dadurch gekennzeichnet, daß der Ventilkegel (4) durch eine Einrichtung (20), die zur Drehung des Ventilkegel-Verlängerungsstücks ohne eine Relativbewegung der Mutter (10) sowie des Ventilkegels (4) betätigbar ist, drehbar ist.

11. Drehendes Hahnventil nach einem der vorhergehenden Ansprüche, dadurch gekennzeichnet, daß ein im Querschnitt deltaförmiger Dichtungsring (7) zwischen einer Schulter am Ventilkegel und der Ventilbuchse (3) vorgesehen ist.

12. Drehendes Hahnventil nach einem der vorhergehenden Ansprüche, dadurch gekennzeichnet, daß das Gehäusedeckelteil (2) am Körper (1) durch Schrauben befestigt ist und daß Abdrückschrauben (35) zum Abdrücken des Deckelteils (2) vom Körper (1) vorgesehen sind.

## Revendications

1. Robinet à tournant comportant un carter comprenant un corps (1) avec des orifices d'entrée et de sortie (32) pour l'entrée et la sortie du fluide, une chambre tronconique dans laquelle s'ouvrent les orifices, un fourreau (3) en matériau compressible, à l'intérieur de la chambre présentant des ouvertures (31) qui le traversent et sont alignées avec les orifices (32), ainsi qu'un tournant tronconique (4) que traverse un passage d'écoulement (30) et qui se loge dans le fourreau, ledit tournant (4) étant rendu étanche par le fourreau et présentant une portion formant prolongement prévue pour être entraînée en rotation depuis l'extérieur du carter pour passer entre une position de robinet ouvert et une position de robinet fermé, ledit tournant (4) présentant un cône de sens opposé au cône de la chambre, caractérisé en ce que le carter comporte une portion (2) amovible formant couvercle que traverse une ouverture dans laquelle se loge le prolongement du tournant (4); en ce que le sens du cône du tournant (4) est tel que le tournant s'élargit en s'éloignant de ladite portion formant prolongement; et en ce qu'il est prévu un moyen (10, 16) qui agit sur ladite portion formant prolongement pour déplacer le tournant (4) axialement par rapport au corps, de façon à contrôler le degré de compression du fourreau (3) entre les parois latérales, coniques en sens opposé, du tournant et de la chambre.

2. Robinet à tournant selon la revendication 1, caractérisé en ce que le fourreau (3) est fixé à la portion formant couvercle (2).

3. Robinet à tournant selon la revendication 2, caractérisé en ce que le fourreau (3), constitué d'un matériau plastique compressible souple, est moulé sur la portion formant couvercle.

4. Robinet à tournant selon la revendication 3, caractérisé en ce que la portion formant couvercle (2) comporte une cage (50, 51, 60) sur laquelle est moulé le matériau plastique compressible.

5. Robinet à tournant selon l'une quelconque des revendications 1 à 4, caractérisé en ce que le moyen prévu pour placer axialement le tournant (4) comporte un écrou (10) vissé sur l'un des deux, du tournant (4) et du carter et pouvant venir directement ou indirectement en contact avec un épaulement (16) prévu sur l'autre des deux, du tournant (4) et du carter.

6. Robinet à tournant selon la revendication 5, caractérisé en ce que l'écrou (10) est vissé sur le tournant et peut venir au contact, par l'intermédiaire d'une bague de poussée (9) logée dans un espace annulaire entre le prolongement du fourreau et la portion formant couvercle (2), avec une butée (16) de la portion formant couvercle du carter.

7. Robinet à tournant selon la revendication 6, caractérisé en ce qu'il est prévu dans l'espace annulaire une bague entretoise (6) qui présente un épaulement qui vient au contact de ladite butée (16), ladite bague de poussée (9) étant logée entre une extrémité dudit écrou (10) et une extrémité de ladite bague entretoise (6).

8. Robinet à tournant selon la revendication 7, caractérisé en ce que l'autre extrémité de la bague entretoise (6) sert de butée pour la compression d'une bague de presse-garniture (8) logée dans un espace annulaire défini par le fourreau (3), par le prolongement du tournant (4) et par l'autre extrémité de la bague entretoise (6).

9. Robinet à tournant selon la revendication 6, caractérisé en ce qu'il est prévu dans l'espace annulaire une bague de contrôle de la pression (40) qui présente un épaulement qui vient au contact de ladite butée, ladite bague de poussée (9) étant logée entre une extrémité dudit écrou (10) et ladite bague de contrôle de pression (40) des moyens compressibles d'étanchéité (42) étant en outre prévus entre la bague de contrôle de pression et l'une des extrémités de la bague entretoise (6), dont l'autre extrémité sert de butée pour comprimer un joint de presse-garniture logé dans un espace annulaire défini par le fourreau (3), le prolongement du tournant (4) et ladite autre extrémité de la bague entretoise (6).

10. Robinet à tournant selon l'une quelconque des revendications 6 à 9, caractérisé en ce que l'on peut faire tourner le tournant (4) à l'aide d'un moyen (20) sur lequel on peut agir pour faire tourner son prolongement sans provoquer le mouvement relatif dudit écrou (10) et du tournant (4).

11. Robinet à tournant selon l'une quelconque des revendications précédentes, caractérisé en ce qu'il est prévu une bague d'étanchéité à section en delta (7) entre un épaulement prévu sur le tournant et le fourreau (13).

12. Robinet à tournant selon l'une quelconque des revendications précédentes, caractérisé en ce que la portion (2) formant couvercle du carter est fixée au corps (1) par des vis et en ce que des vis vérins (35) sont prévues pour extraire de force la portion formant couvercle (2) hors dudit corps (1).

_Fig .1._

Fig.2.

## Fig.3.

0 100 629

_Fig.4._

_Fig.6._

4

*Fig.5.*